# EUROPÄISCHE PATENTSCHRIFT

(11) **EP 2 441 162 B1**
(45) Veröffentlichungstag und Bekanntmachung des Hinweises auf die Patenterteilung: **16.03.2016**
(21) Anmeldenummer: 10723925.3
(22) Anmeldetag: 22.05.2010
(51) Int. Cl.: H02M 3/07

(54) **BORDNETZ FÜR EIN KRAFTFAHRZEUG UND VERFAHREN ZUM BETREIBEN EINES ELEKTRISCHEN VERBRAUCHERS**
ON-BOARD ELECTRICAL SYSTEM FOR A MOTOR VEHICLE AND METHOD FOR OPERATING AN ELECTRICAL LOAD
RÉSEAU DE BORD POUR UN VÉHICULE À MOTEUR ET PROCÉDÉ POUR FAIRE FONCTIONNER UN CONSOMMATEUR ÉLECTRIQUE

(30) Priorität: 09.06.2009 DE 102009024374
(43) Veröffentlichungstag der Anmeldung: 18.04.2012
(73) Patentinhaber: Audi AG, 85045 Ingolstadt (DE); Hochschule Ingolstadt, 85049 Ingolstadt (DE)
(72) Erfinder: WINKLER, Josef, 85110 Kipfenberg (DE); PFORR, Johannes, 80995 München (DE)
(74) Vertreter: Mader, Wilfried
(86) Internationale Anmeldenummer: PCT/EP2010/003156
(87) Internationale Veröffentlichungsnummer: WO 2010/142373

(56) Entgegenhaltungen:
- EP-A2- 1 035 637
- DE-A1- 10 213 105
- US-A1- 2007 210 781
- US-B1- 6 563 235
- GLINKA M: "Prototype of multiphase modular multilevel-converter with 2MW power rating and 17- level- output- voltage", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seiten 3572-3576, XP010739487, ISBN: 978-0-7803-8399-9

## Beschreibung

Die Erfindung betrifft ein Bordnetz für ein Kraftfahrzeug. Das Bordnetz umfasst eine Fahrzeugbatterie, einen elektrischen Verbraucher sowie einen Energiespeicher mit einem positiven und einem negativen Anschluss. Die Erfindung betrifft außerdem ein Kraftfahrzeug mit einem solchen Bordnetz sowie ein Verfahren zum Betreiben eines elektrischen Verbrauchers in einem Bordnetz eines Kraftfahrzeugs.

In Kraftfahrzeugen werden heutzutage zunehmend elektrische Verbraucher eingesetzt, die hohe Leistungen verbrauchen. Solche elektrischen Verbraucher werden als Ersatz für mechanische oder hydraulische Systeme verwendet, um einen geringeren Kraftstoffverbrauch bei verbesserter Funktionalität zu erreichen. Es geht hier im Wesentlichen um Elektromotoren, die zum Beispiel für die Lenkung oder auch in einem Bremssystem (zum Beispiel dem ESP, dem " Elektronischen Stabilitätsprogramm") eingesetzt werden. Die Stromaufnahme dieser elektrischen Verbraucher ist nicht konstant, da diese nur bei Bedarf eingeschaltet werden. Auch ein Starter für eine Brennkraftmaschine stellt einen solchen elektrischen Verbraucher dar, dessen Stromaufnahme sehr hohe Schwankungen aufweist, nämlich abhängig von der Drehzahl.

Das Bordnetz eines Kraftfahrzeugs besteht im einfachsten Fall aus einer Fahrzeugbatterie, einem Generator und einer Vielzahl von Energieverbrauchern. Bei laufendem Motor stellt der Generator elektrische Spannung bereit, mit welcher die Verbraucher versorgt und die Fahrzeugbatterie aufgeladen werden können. Auch kann die vom Generator abgegebene Leistung durch eine Regelung an den jeweils augenblicklichen Strombedarf der elektrischen Verbraucher angepasst werden. Jedoch belasten die neuartigen elektrischen Verbraucher das Bordnetz mit hohen pulsförmigen Strömen. Derzeit eingesetzte Generatoren sind zu träge, um diese pulsförmigen Ströme bereitzustellen bzw. die Spannung schnell zu erhöhen oder zu erniedrigen. Die Bordnetzspannung wird daher hauptsächlich durch die Fahrzeugbatterie stabilisiert, und die Qualität der Bordnetzspannung wird durch den Innenwiderstand der Fahrzeugbatterie bestimmt. Bei den hohen pulsförmigen Strömen kann die Bordnetzspannung um mehrere Volt einbrechen, so dass sensible Verbraucher in ihrer Funktion vorübergehend gestört werden. Ein solches Verhalten ist insbesondere auch bei den neuen Start-/Stopp-Systemen in Kraftfahrzeugen sehr problematisch.

Es wurden in der Vergangenheit unterschiedliche Systeme zur Reduzierung der Spannungseinbrüche und zum Schutz sensibler Verbraucher entwickelt. Die meisten dieser Systeme beruhen auf Doppelschichtkondensatoren oder Batterien, die als zusätzliche Energiespeicher im Bordnetz verwendet werden. In vielen bisherigen Systemen wird der zusätzliche Energiespeicher parallel zur Fahrzeugbatterie geschaltet; durch diese Parallelschaltung wird die Gesamtimpedanz reduziert, und der Spannungseinbruch des Bordnetzes wird geringer. Solche Bordnetze sind beispielsweise aus den Druckschriften DE 10 2005 015 995 A1 sowie DE 10 2007 026 164 A1 bekannt.

Die Zuschaltung eines zusätzlichen Energiespeichers kann auch unter Vermittlung eines Gleichspannungswandlers erfolgen, wie dies in den Druckschriften WO 02/066293 A1 und DE 198 59 036 A1 beschrieben ist.

Es ist außerdem Stand der Technik, die sensiblen Verbraucher direkt durch den zusätzlichen Energiespeicher zu versorgen und somit von den Hochleistungsverbrauchern zu entkoppeln. Eine solche Vorgehensweise ist zum Beispiel in Robert Bosch GmbH, "Autoelektrik, Autoelektronik, Systeme und Komponenten", 4. Auflage, Vieweg Verlag, Wiesbaden, ISBN 3-528-13872-6, Seite 16, Abbildung 7, beschrieben.

Der neueste Trend geht dahin, einen zusätzlichen Energiespeicher, wie zum Beispiel einen Doppelschichtkondensator, in Reihe zur Fahrzeugbatterie zu schalten. Ein solches Bordnetz ist aus dem Dokument Continental, ELKS 2008 - "Elektrische Leistungsbordnetze und Komponenten von Straßenfahrzeugen", Beiträge zum gleichnamigen ersten Symposium vom 8. und 9. Oktober 2008, TU Braunschweig, ISBN: 978-3-937655-17-8, Seite 90, bekannt. Bei diesem Bordnetz wird der Spannungseinbruch bei einem Motorstart dadurch kompensiert, dass ein Doppelschichtkondensator in Reihe zu der Fahrzeugbatterie geschaltet wird. Durch diese Reihenschaltung kann also - im Idealzustand, wenn der Starter nicht betätigt wird - eine solche Spannung an den Verbrauchern bereitgestellt werden, die größer als die Batteriespannung ist. Demnach erfolgt eine Unterspannungskompensation. Eine Reihenschaltung aus einer Fahrzeugbatterie und einem Doppelschichtkondensator ist ebenfalls aus der Druckschrift DE 10 2005 042 154 A1 bekannt.

Der gesamte Stand der Technik beschäftigt sich mit der Problematik, Spannungseinbrüche im Bordnetz zu kompensieren. Es ist eine besondere Herausforderung, ohne viel Aufwand, nämlich insbesondere ohne Einsatz eines teuren Gleichspannungswandlers, nicht nur die Spannungseinbrüche kompensieren zu können, sondern auch im Bordnetz auftretenden Überspannungen zu begegnen.

Aus dem Dokument EP 1 035 637 A2 ist ein Energieversorgungssystem bekannt, welches einen Kondensator als Spannungsquelle aufweist. Der Kondensator ist mit einer Vollbrückenschaltung umfassend einen weiteren Kondensator in Reihe geschaltet. Die Vollbrückenschaltung hat vier elektrische Schalter, so dass der weitere Kondensator bedarfsabhängig in Reihe zur Spannungsquelle geschaltet werden kann. Es werden dabei Unterspannungen kompensiert, die an der Spannungsquelle auftreten.

Es ist Aufgabe der Erfindung, eine Lösung aufzuzeigen, wie ein elektrischer Verbraucher in einem Bordnetz der eingangs genannten Gattung ohne viel Aufwand zuverlässig betrieben werden kann.

Diese Aufgabe wird erfindungsgemäß durch ein Bordnetz mit den Merkmalen gemäß Patentanspruch 1 sowie durch ein Kraftfahrzeug mit den Merkmalen gemäß Patentanspruch 13 gelöst, wie auch durch ein Verfahren mit den Merkmalen gemäß Patentanspruch 14.

Das erfindungsgemäße Bordnetz umfasst eine Fahrzeugbatterie, einen elektrischen Verbraucher und einen Energiespeicher mit einem positiven und einem negativen Anschluss. Es sind erfindungsgemäß Schaltmittel bereitgestellt, die in einem ersten Schaltzustand den positiven Anschluss des Energiespeichers mit der Fahrzeugbatterie und den negativen Anschluss des Energiespeichers mit dem elektrischen Verbraucher koppeln und in zumindest einen von dem ersten Schaltzustand verschiedenen weiteren Schaltzustand verbringbar sind. Eine Steuereinrichtung kann die Schaltmittel zwischen dem ersten und dem zumindest einem weiteren Schaltzustand schalten.

Es kann somit erfindungsgemäß eine Spannung an dem elektrischen Verbraucher bereitgestellt werden, die niedriger als die an der Fahrzeugbatterie anliegende elektrische Spannung ist, sei diese eine Batteriespannung oder eine Generatorspannung eines parallel zur Fahrzeugbatterie geschalteten Generators. Diese niedrigere Spannung wird mit dem zusätzlichen Energiespeicher, zum Beispiel einem Doppelschichtkondensator (auch unter der Bezeichnung SuperCap bekannt) erreicht, also ohne Einsatz eines Gleichspannungswandlers, wie er Stand der Technik ist.

Das erfindungsgemäße Bordnetz hat den Vorteil, dass - insbesondere wenn ein Generator parallel zur Batterie gekoppelt ist - eine Überspannung am elektrischen Verbraucher kompensiert werden kann. Eine solche Überspannung kann zum Beispiel dann entstehen, wenn ein parallel zur Fahrzeugbatterie gekoppelter elektrischer Hochleistungsverbraucher abgeschaltet wird. In diesem Falle entsteht eine Spannung im Bordnetz, die größer als die im Normalbetrieb vom Generator erzeugte Spannung ist. Bei einer solchen Überspannung ist der Generator alleine nicht in der Lage, diese schnell genug zu kompensieren. In diesem Falle zeigt sich das erfindungsgemäße Bordnetz besonders vorteilhaft, es kann diese Überspannung kompensieren, nämlich durch Koppeln des positiven Anschlusses des Energiespeichers mit der Fahrzeugbatterie (gegebenenfalls auch mit dem Generator) und des negativen Anschlusses des Energiespeichers mit dem elektrischen Verbraucher. Denn dann wird die vom Energiespeicher bereitgestellte Spannung wegen dessen Umpolung von der an der Fahrzeugbatterie anliegenden Spannung abgezogen.

Ein weiterer Vorteil des erfindungsgemäßen Bordnetzes ist darin zu sehen, dass eine Regeneration der Fahrzeugbatterie erfolgen kann, nämlich wie folgt: Es wird durch einen Generator eine Spannung an der Batterie erzeugt, die deutlich größer als die Bordnetzspannung in einem Normalbetrieb und somit deutlich größer als die Nennspannung der Fahrzeugbatterie ist (zum Beispiel 17 Volt bei einer Nennspannung von 12 Volt). Diese vom Generator erzeugte Spannung kann dann mithilfe des Energiespeichers für den elektrischen Verbraucher erniedrigt werden. Durch Anlegen einer höheren Spannung an der Fahrzeugbatterie für ein bestimmtes Zeitintervall kann durch Gasblasenrührung die Säurebeschichtung der Fahrzeugbatterie aufgehoben werden. Dadurch steigt die wirksame Kapazität der Fahrzeugbatterie, und der Innenwiderstand derselben sinkt. Bei einer solchen Regeneration der Fahrzeugbatterie verändert sich auch die Kristallgröße des abgeschiedenen Bleisulfats. Während der Lebenszeit einer Fahrzeugbatterie kristallisieren nämlich immer mehr kleinere PbSO₄-Kristalle zu größeren und nur schwer löslichen um. Dadurch vermindert sich die aktive Masse der Bleisulfat-Kristalle (Sulfatierung). Das Anlegen einer höheren Spannung an der Fahrzeugbatterie verändert die Kristallgröße bzw. Kristallstruktur des Bleisulfats dahingehend, dass es von einer unlöslichen in eine lösliche Form übergeht und dadurch am Lade- bzw. Entladeprozess wieder teilnehmen kann. Ebenfalls hierdurch steigt die wirksame Kapazität der Fahrzeugbatterie, während der Innenwiderstand sinkt.

Nicht unbeachtet sollte ein weiterer Vorteil des erfindungsgemäßen Bordnetzes verbleiben: Ist der elektrische Verbraucher ein Starter für eine Brennkraftmaschine, so kann die Spannung am Starter zu Beginn des Startvorgangs mithilfe des Energiespeichers erniedrigt werden. Zu Beginn des Startvorgangs sieht der Starter - der ein Gleichstrommotor ist - nämlich nur einen Kurzschluss. Durch Erniedrigen der Spannung zu Beginn des Startvorgangs können somit die Ströme, die in der Regel sehr hoch sind (etwa 1000 Ampere) reduziert werden. Unter weiteren Voraussetzungen (siehe unten) kann somit der gesamte Startvorgang im Vergleich zum Stand der Technik beschleunigt werden.

Es ist vorgesehen, dass die Schaltmittel in einem zweiten Schaltzustand die Fahrzeugbatterie mit dem elektrischen Verbraucher koppeln. Dann ist der Energiespeicher überbrückt, und an dem elektrischen Verbraucher liegt dieselbe elektrische Spannung an, wie an der Fahrzeugbatterie. Dieser zweite Schaltzustand der Schaltmittel kann einen Normalbetrieb des Bordnetzes darstellen, in welchem der elektrische Verbraucher direkt mit der Fahrzeugbatterie - und bevorzugt auch mit einem parallel zur Fahrzeugbatterie geschalteten Generator - verbunden ist. Tritt zum Beispiel eine Überspannung im Bordnetz auf, so können die Schaltmittel von dem zweiten Schaltzustand in den ersten Schaltzustand verbracht werden, und die Überspannung kann kompensiert werden.

Die Steuereinrichtung kann durch Ansteuerung der Schaltmittel eine solche elektrische Spannung an dem elektrischen Verbraucher bereitstellen, deren Mittelwert in einem Wertebereich von U_{B} - U_{S} bis U_{B} liegt. Dabei bezeichnen U_{B} eine an der Fahrzeugbatterie anliegende Spannung - sei diese die Generatorspannung oder die Batteriespannung - und U_{S} eine durch den Energiespeicher bereitgestellte Spannung. Dies kann zum Beispiel so gestaltet werden, dass die Steuereinrichtung die Schaltmittel abwechselnd mit einer vorbestimmten Frequenz zwischen dem ersten und dem zweiten Schaltzustand schalten. Durch entsprechende Auswahl des Verhältnisses der Zeit, während welcher der Energiespeicher zwischen der Fahrzeugbatterie und dem elektrischen Verbraucher geschaltet ist, zu der Zeit, in welcher der Energiespeicher überbrückt ist, kann ein beliebiger Mittelwert der Spannung an dem elektrischen Verbraucher in dem oben angegebenen Wertebereich erzielt werden. Somit ist es möglich, eine beliebige Überspannung, sei es eine geringe oder auch eine hohe Überspannung, zu kompensieren. Es muss lediglich der Mittelwert entsprechend eingestellt werden. Dies kann zum Beispiel in einem solchen Ablauf umgesetzt werden: Der elektrische Verbraucher ist ein sensibler Verbraucher, zum Beispiel ein Radio. Ein Elektromotor eines Lenksystems - als Hochleistungsverbraucher - und ein Generator sind parallel zur Fahrzeugbatterie gekoppelt. Der Fahrer des Kraftfahrzeugs fährt zunächst geradeaus, so dass der Elektromotor nicht betätigt wird. Während dieser Zeit sind die Fahrzeugbatterie und der parallel dazu geschaltete Generator direkt mit dem Radio verbunden, d. h. der Energiespeicher ist überbrückt. Die Steuereinrichtung regelt in diesem Normalbetrieb den Generator so, dass er eine Bordnetzspannung von zum Beispiel 14,5 Volt bereitstellt. Der Fahrer lenkt nun das Fahrzeug nach links, und der Elektromotor des Lenksystems wird in Betrieb genommen. Während des Betriebs des Elektromotors erhöht der Generator die Bordnetzspannung, so dass diese von dem Wert 14,5 Volt nicht abweicht. Ist das Lenkmanöver abgeschlossen, wird der Elektromotor abgeschaltet, und die Bordnetzspannung erhöht sich zum Beispiel auf 17 Volt. Der Generator ist zu langsam, um diese Überspannung schnell zu kompensieren. Die Steuereinrichtung schaltet nun die Schaltmittel abwechselnd zwischen dem ersten und dem zweiten Schaltzustand, nämlich derart, dass durch den Energiespeicher die Bordnetzspannung wieder auf 14,5 Volt reduziert wird. Die Schaltmittel werden also so abwechselnd zwischen dem ersten und dem zweiten Schaltzustand geschaltet, dass von dem Energiespeicher - welcher eine maximale Spannung von z.B. 5 Volt bereitstellen kann - eine Spannung mit einem Mittelwert von -2,5 Volt bereitgestellt wird. Somit ist gewährleistet, dass die Bordnetzspannung selbst nach Abschalten des Antriebsmotors auf 14,5 Volt eingestellt wird.

Es kann vorgesehen sein, dass die Schaltmittel in einem dritten Schaltzustand den positiven Anschluss des Energiespeichers mit dem elektrischen Verbraucher und den negativen Anschluss des Energiespeichers mit der Fahrzeugbatterie koppeln. Dann ist an dem elektrischen Verbraucher auch eine solche Spannung möglich, die größer als die an der Fahrzeugbatterie anliegende Spannung ist. Diese Ausführungsform wird dazu verwendet, Spannungseinbrüche - die im Bordnetz zum Beispiel durch Zuschalten eines Hochleistungsverbrauchers entstehen - ausgleichen zu können. Insbesondere wenn ein Generator parallel zu der Fahrzeugbatterie geschaltet ist, kann durch Verbringen der Schaltmittel in den dritten Schaltzustand eine Unterspannung schnell kompensiert werden. Ein Generator ist nämlich zu träge, durch Hochleistungsverbraucher verursachte Spannungseinbrüche schnell auszugleichen. Sensible elektrische Verbraucher schalten in der Regel dann ab, wenn die Bordnetzspannung 10,8 Volt unterschreitet. Ein besonderer Vorteil dieser Ausführungsform besteht somit darin, dass das Abschalten von sensiblen Verbrauchern bei Auftreten eines Spannungseinbruchs vermieden werden kann. Somit sind bei dieser Ausführungsform die Schaltmittel zumindest zwischen dem ersten Schaltzustand, in welchem der positive Anschluss des Energiespeichers mit der Fahrzeugbatterie gekoppelt ist, und dem dritten Schaltzustand, in welchem der Energiespeicher umgekehrt gepolt ist, schaltbar. Eine solche Kombination ermöglicht die Kompensation sowohl einer Überspannung als auch einer Unterspannung im Bordnetz. Kommt dazu noch der zweite Schaltzustand, in welchem der Energiespeicher überbrückt ist, so kann die Spannung am elektrischen Verbraucher beliebig in einem Wertebereich von U_{B} - U_{S} bis U_{B} +U_{S} eingestellt werden.

Der dritte Schaltzustand der Schaltmittel kann auch in Verbindung mit dem ersten Schaltzustand zum Vorheizen des Energiespeichers auf eine bestimmte Temperatur bei Inbetriebnahme des Bordnetzes und/oder bei einem Übergang von einem Betriebszustand in einen anderen Betriebszustand des Bordnetzes dienen. Es kann nämlich vorgesehen sein, dass die Schaltmittel während einer Vorheizphase des Energiespeichers und/oder bei einem Übergang von einem Betriebszustand in einen anderen Betriebszustand abwechselnd zwischen dem ersten und dem dritten Schaltzustand geschaltet werden. Dann wird der Energiespeicher mehrmals aufgeladen und wieder entladen, bis er auf eine bestimmte Betriebstemperatur aufgeheizt wird.

Die Steuereinrichtung kann durch Ansteuerung der Schaltmittel eine elektrische Spannung an dem elektrischen Verbraucher bereitstellen, deren Mittelwert in einem Wertebereich von U_{B} bis U_{B} + U_{S} liegt. Dies kann zum Beispiel dadurch erreicht werden, dass die Steuereinrichtung die Schaltmittel abwechselnd zwischen dem dritten Schaltzustand, in welchem der positive Anschluss des Energiespeichers mit dem Verbraucher gekoppelt ist, und dem zweiten Schaltzustand schaltet, in welchem der Energiespeicher überbrückt ist.

So kann also ein beliebiger Spannungseinbruch im Bordnetz durch entsprechendes Schalten der Schaltmittel ausgeglichen werden, nämlich zum Beispiel auf eine solche Art und Weise: Der Fahrer fährt mit dem Kraftfahrzeug geradeaus. Während dieser Zeit bleibt ein Elektromotor eines Bremssystems - der parallel zur Fahrzeugbatterie gekoppelt ist - ausgeschaltet. Die Steuereinrichtung regelt die vom Generator erzeugte Bordnetzspannung auf 14,5 Volt. Der Fahrer betätigt nun die Bremse des Kraftfahrzeugs. Der Antriebsmotor im Bremssystem wird aktiviert, und die Bordnetzspannung bricht zu Beginn dieses Manövers ein, nämlich zum Beispiel auf 12 Volt. Da der Generator zu langsam ist, um diesen Spannungseinbruch schnell auszugleichen, schaltet die Steuereinrichtung die Schaltmittel abwechselnd zwischen dem zweiten und dem dritten Schaltzustand so, dass die Bordnetzspannung wieder auf 14,5 Volt eingestellt wird. Somit wird der Generatorspannung von 12 Volt die Spannung des Energiespeichers - zum Beispiel von 5 Volt - periodisch aufaddiert, so dass durch entsprechendes Schalten der Schaltmittel eine Spannung am elektrischen Verbraucher mit einem Mittelwert von 14,5 Volt bereitgestellt werden kann. Damit werden sensible Verbraucher in ihrem Betrieb nicht beeinträchtigt.

Es kann auch ein vierter Schaltzustand der Schaltmittel vorgesehen sein, in welchem die Schaltmittel den elektrischen Verbraucher von der Fahrzeugbatterie trennen. Auf diesem Wege wird ein Verpolschutz für den elektrischen Verbraucher geschaffen: Wird eine Fremdbatterie an die Fahrzeugbatterie mit einer falschen Polung angeschlossen - um ein anderes Kraftfahrzeug zu starten - so wird der Stromkreis zum elektrischen Verbraucher durch die Schaltmittel unterbrochen, und der elektrische Verbraucher wird vor einer falschen Verpolung geschützt. Diese Ausführungsform erweist sich auch als dann besonders vorteilhaft, wenn mehrere elektrische Verbraucher im Bordnetz vorgesehen sind, die mit einem einzigen Relais von der Fahrzeugbatterie getrennt werden sollen. Dann müssen die Schaltmittel lediglich in den vierten Schaltzustand verbracht werden, ohne die elektrischen Verbraucher gesondert von der Fahrzeugbatterie trennen zu müssen.

Es hat sich als besonders vorteilhaft herausgestellt, wenn ein Tiefpassfilter mit den Schaltmitteln gekoppelt ist. Ein solcher Filter kann eine mit den Schaltmitteln in Reihe gekoppelte Spule aufweisen, wie auch einen parallel zu der Reihenschaltung der Schaltmittel und der Spule gekoppelten Kondensator. Dann kann an dem elektrischen Verbraucher eine geglättete Spannung bereitgestellt werden, d. h. eine Gleichspannung. Die Amplitude dieser Gleichspannung entspricht dann dem Mittelwert der Summe der an der Batterie anliegenden Spannung und der durch den Energiespeicher bereitgestellten Spannung.

Grundsätzlich sind bei dem Bordnetz zwei Alternativen sinnvoll möglich:
Zum einen kann ein Generator parallel zu der Fahrzeugbatterie geschaltet sein. Dann kann die Parallelschaltung der Fahrzeugbatterie und des Generators über die Schaltmittel mit dem elektrischen Verbraucher gekoppelt werden. Durch entsprechende Ansteuerung der Schaltmittel kann hier die Spannung an dem elektrischen Verbraucher dann stabilisiert werden, wenn ein Hochleistungsverbraucher parallel zum Generator zugeschaltet oder abgeschaltet wird. Zum anderen kann der elektrische Verbraucher selbst ein Hochleistungsverbraucher - zum Beispiel ein Starter für eine Brennkraftmaschine - sein. Dann kann eine spannungsvariable Ansteuerung dieses Hochleistungsverbrauchers erfolgen.

Ist ein Generator zum Erzeugen einer Generatorspannung parallel zu der Fahrzeugbatterie gekoppelt, so kann vorgesehen sein, dass die Steuereinrichtung die Schaltmittel abhängig von dem jeweils augenblicklichen Wert der Generatorspannung ansteuert. Die Steuereinrichtung kann zum Beispiel die an dem elektrischen Verbraucher anliegende Spannung auf einen Sollwert regeln, nämlich durch entsprechende Ansteuerung der Schaltmittel. Bricht die Generatorspannung ein, so kann die Steuereinrichtung diesen Spannungseinbruch durch entsprechendes Zuschalten des Energiespeichers kompensieren. Liegt eine Überspannung am Generator vor, so kann diese ebenfalls durch entsprechende Ansteuerung der Schaltmittel - wie oben ausgeführt - kompensiert werden.

In einer Ausführungsform - in welcher ein Generator zum Erzeugen einer Generatorspannung parallel zur Fahrzeugbatterie gekoppelt ist und die Steuereinrichtung in einem Normalbetrieb die Generatorspannung auf einen ersten Wert einstellt, der größer als die Nennspannung der Fahrzeugbatterie ist - ist vorgesehen, dass die Steuereinrichtung in einem Regenerationsbetrieb die Generatorspannung auf einen vorbestimmten zweiten Wert erhöht, der größer als der erste Wert ist. Im Regenerationsbetrieb wird also die Generatorspannung deutlich höher als die Nennspannung der Fahrzeugbatterie eingestellt. In einem solchen Regenerationsbetrieb wird die während der Lebensdauer der Fahrzeugbatterie gebildete Säureschichtung durch Gasblasenrührung aufgehoben, und die wirksame Kapazität der Fahrzeugbatterie wird erhöht. In diesem Regenerationsbetrieb sinkt auch der Innenwiderstand der Fahrzeugbatterie. Durch das Beaufschlagen der Fahrzeugbatterie mit einer hohen Spannung kann außerdem die Kristallgröße des abgeschiedenen Bleisulfats dahingehend verändert werden, dass es von einer unlöslichen in eine lösliche Form übergeht und dadurch an Lade- und Entladeprozessen wieder teilnehmen kann.

In einer Ausführungsform - in welcher ein Generator zum Erzeugen einer Generatorspannung parallel zur Fahrzeugbatterie gekoppelt ist und die Steuereinrichtung in einem Normalbetrieb die Generatorspannung auf einen ersten Wert einstellt, der größer als die Nennspannung der Fahrzeugbatterie ist - ist vorgesehen, dass die Steuereinrichtung in einem Rekuperationsbetrieb die Generatorspannung auf einen vorbestimmten zweiten Wert erhöht, der größer als der erste Wert ist. Im Rekuperationsbetrieb wird also die Generatorspannung höher als die Nennspannung der Fahrzeugbatterie eingestellt. In einem solchen Regenerationsbetrieb kann die Fahrzeugbatterie aufgeladen werden, wobei die beim Bremsen des Kraftfahrzeugs oder im Schubbetrieb erzeugte kinetische Energie in elektrische Energie umgewandelt und in der Fahrzeugbatterie gespeichert wird. Im Rekuperationsbetrieb werden die Schaltmittel bevorzugt in den zweiten oder den vierten Schaltzustand verbracht, so dass der elektrische Verbraucher mit dem Generator entweder direkt verbunden oder vom Generator entkoppelt wird. Die Zeitdauer des Rekuperationsbetriebs ist bevorzugt geringer als die des Regenerationsbetriebs.

Ist der elektrische Verbraucher ein Starter für eine Brennkraftmaschine, so kann der Energiespeicher den Startvorgang unterstützen: Die Steuereinrichtung kann bei Einschalten des Starters - d. h. zu Beginn des Startvorgangs - die Schaltmittel so ansteuern, dass an dem Starter eine niedrigere Spannung als die Batteriespannung anliegt. Dies kann die Steuereinrichtung zum Beispiel durch Verbringen der Schaltmittel in den ersten Schaltzustand, in welchem der positive Anschluss des Energiespeichers mit der Fahrzeugbatterie gekoppelt ist, oder durch abwechselndes Schalten der Schaltmittel zwischen dem ersten und dem zweiten Schaltzustand erreichen. Also liegt zu Beginn des Startvorgangs eine Spannung an dem Starter an, die geringer als die Batteriespannung ist. Somit werden die Ströme, die zu Beginn des Startvorgangs durch den Starter fließen, kleiner, und die Fahrzeugbatterie wird weniger belastet.

Nach einem vorbestimmten Zeitintervall nach dem Beginn des Startvorgangs kann die am Starter anliegende Spannung erhöht werden. Dreht sich der Starter, so sieht er keinen Kurzschluss mehr. Somit kann die Spannung am Starter im Vergleich zum Beginn des Startvorgangs erhöht werden, ohne die Fahrzeugbatterie zu belasten. Durch eine solche Vorgehensweise kann die Brennkraftmaschine deutlich schneller als bei einer konstanten Spannung in Betrieb genommen werden, wodurch auch die Fahrzeugbatterie weniger als im Stand der Technik belastet wird. Dies erhöht auch die Lebensdauer der Fahrzeugbatterie.

Es können verschiedenste Verläufe der am Starter während des Startvorgangs anliegenden Spannung erzeugt werden. Zum Beispiel kann ein linearer Verlauf zwischen U_{B} - U_{S} und U_{B} + U_{S} vorgesehen sein. Gleichfalls kann auch ein logarithmischer Anstieg der Spannung am Starter erzielt werden, d.h. die Spannung kann zunächst steil ansteigen, um sich dann langsamer dem Wert U_{B} + U_{S} zu nähern. Je nach Brennkraftmaschine kann also ein jeweils optimaler Verlauf der Spannung am Starter eingestellt werden.

Sinnvoll möglich ist des Weiteren die Synchronisation der Drehzahl des Starters mit der der Brennkraftmaschine mithilfe der Schaltmittel. Dies gilt insbesondere für Start-Stopp-Systeme, bei denen die Brennkraftmaschine mehrmals während einer einzelnen Fahrt abgestellt und wieder angelassen wird. Es gibt bei Start-Stopp-Systemen solche Situationen, in denen die Brennkraftmaschine - zum Beispiel beim Anhalten an einer Kreuzung - in den Stopp-Modus übergeht, der Fahrer jedoch im selben Augenblick wieder weiterfahren möchte. In der Regel dauert es sehr lange, bis die Brennkraftmaschine wieder gestartet wird; denn die auslaufende Brennkraftmaschine muss zunächst in Stillstand gebracht werden, bevor der Starter wieder in einen Zahnkranz der Brennkraftmaschine eingreifen kann. Es ist deshalb in einer Ausführungsform vorgesehen, dass vor dem Einleiten des Vorgangs des Startens der Brennkraftmaschine - d.h. vor dem Eingreifen des Starters in den Zahnkranz der Brennkraftmaschine - die Drehzahl des Starters mithilfe der Schaltmittel an die Drehzahl der Brennkraftmaschine angepasst wird. Bevorzugt ist die Steuereinrichtung dazu ausgelegt, durch Verbringen der Schaltmittel in den ersten Schaltzustand oder durch abwechselndes Schalten der Schaltmittel zwischen dem ersten und dem zweiten Schaltzustand die vor dem Einleiten des Startvorgangs am Starter anliegende Spannung auf einen solchen Wert einzustellen, der niedriger als die Batteriespannung ist. Somit kann die Drehzahl des Starters zunächst mit der Drehzahl der Brennkraftmaschine synchronisiert werden. Läuft der Starter synchron mit der Brennkraftmaschine, so kann der Starter in den Zahnkranz der Brennkraftmaschine eingreifen, um diese erneut in Betrieb zu nehmen. Es kann auch vorgesehen sein, dass die Steuereinrichtung die am Starter anliegende Spannung erhöht, sobald der Starter mit dem Zahnkranz in Verbindung steht. Zum Beispiel kann die Steuereinrichtung hier die Schaltmittel in den dritten Schaltzustand verbringen oder zwischen dem zweiten und dem dritten Schaltzustand schalten. Durch eine solche Vorgehensweise wird der Vorgang des Startens insgesamt beschleunigt, und der Fahrer kann unmittelbar nach dem Anhalten wieder losfahren.

Ist ein Generator parallel zu dem elektrischen Verbraucher gekoppelt, so kann bei dem Bordnetz ein Rekuperationsbetrieb vorgesehen sein. Die Steuereinrichtung kann in einem Normalbetrieb die Generatorspannung auf einen ersten Wert, der in der Regel größer als die Nennspannung der Fahrzeugbatterie ist, und in dem Rekuperationsbetrieb auf einen vorbestimmten zweiten Wert einstellen, der größer als der erste Wert ist. Werden im Rekuperationsbetrieb die Schaltmittel in den dritten Schaltzustand - in welchem der negative Anschluss des Energiespeichers mit der Fahrzeugbatterie gekoppelt ist - verbracht, so können in diesem Falle sowohl der Energiespeicher, als auch die Fahrzeugbatterie aufgeladen werden. Im Rekuperationsbetrieb kann zum Beispiel die beim Bremsen des Kraftfahrzeugs oder im Schubbetrieb erzeugte kinetische Energie in elektrische Energie umgewandelt und im Energiespeicher sowie in der Fahrzeugbatterie gespeichert werden. An den Rekuperationsbetrieb schließt sich bevorzugt unmittelbar ein Zugbetrieb an, in welchem der Energiespeicher entladen wird. Dann kann die Generatorspannung auf ein Minimum, zum Beispiel auf 12 Volt, reduziert werden, und es kann Kraftstoff gespart werden. Ein Rekuperationsbetrieb kann also beispielsweise so aussehen: Der Fahrer beschleunigt das Kraftfahrzeug im fünften Gang auf eine bestimmte Geschwindigkeit, zum Beispiel auf 120 Stundenkilometer. Der Fahrer lässt das Gaspedal los und fährt weiter im fünften Gang, und das Kraftfahrzeug geht in einen Schubbetrieb über. In diesem Schubbetrieb wird das Kraftfahrzeug durch die Brennkraftmaschine gebremst, und es wird kein Kraftstoff verbraucht. Während dieser Zeit wird die Generatorspannung auf 17 Volt eingestellt, also höher als die Bordnetzspannung von 14,5 Volt im Normalbetrieb. Die Steuereinrichtung verbringt die Schaltmittel in den dritten Schaltzustand, in welchem der positive Anschluss des Energiespeichers mit dem Generator (parallel zum elektrischen Verbraucher) und der negative Anschluss des Energiespeichers mit der Fahrzeugbatterie gekoppelt sind. Somit werden sowohl der Energiespeicher als auch die Fahrzeugbatterie aufgeladen. Bestätigt der Fahrer erneut das Gaspedal, beschleunigt das Fahrzeug wieder. Zu diesem Zeitpunkt erfolgt ein Übergang von dem Rekuperationsbetrieb in den Zugbetrieb, in welchem die Generatorspannung auf 12 Volt reduziert wird, also deutlich geringer als die Bordnetzspannung von 14,5 Volt im Normalbetrieb eingestellt wird. Die Steuereinrichtung verbringt die Schaltmittel in den ersten Schaltzustand, in welchem nun der positive Anschluss des Energiespeichers mit der Fahrzeugbatterie gekoppelt ist. Auf diesem Wege wird der Energiespeicher entladen, wodurch die an der Fahrzeugbatterie anliegende Spannung höher als die Generatorspannung von 12 Volt ist, zum Beispiel 14,5 Volt beträgt. Es kann somit Kraftstoff gespart werden, da der Generator den Antriebsstrang des Kraftfahrzeugs weniger belastet.

Die Schaltmittel können umfassen:
- einen ersten Schalter, insbesondere einen MOSFET, über welchen die Fahrzeugbatterie mit dem positiven Anschluss des Energiespeichers koppelbar ist,
- einen zweiten Schalter, insbesondere einen MOSFET, über welchen der elektrische Verbraucher mit dem positiven Anschluss des Energiespeichers koppelbar ist,
- einen dritten Schalter, insbesondere einen MOSFET, über welchen die Fahrzeugbatterie mit dem negativen Anschluss des Energiespeichers koppelbar ist, und
- einen vierten Schalter, insbesondere einen MOSFET, über welchen der elektrische Verbraucher mit dem negativen Anschluss des Energiespeichers koppelbar ist.

Durch Einsatz von MOSFETs können beim Umpolen des Energiespeichers hohe Schaltfrequenzen erreicht werden, die mit herkömmlichen Relais nicht erzielt werden können. Vorzugsweise werden solche MOSFETs eingesetzt, bei denen die parasitäre Diode nicht vorhanden ist. Solche MOSFETs sind seit kurzem auf dem Markt erhältlich. Durch Verwendung von solchen MOSFETs kann eine vollständige Entkopplung zwischen dem Verbraucher und der Fahrzeugbatterie erreicht werden.

Zur Erfindung gehört auch ein Kraftfahrzeug, welches ein solches Bordnetz aufweist.

Das erfindungsgemäße Verfahren dient zum Betreiben eines elektrischen Verbrauchers in einem Bordnetz eines Kraftfahrzeugs. Es sind eine Spannungserzeugungseinheit (zum Beispiel eine Fahrzeugbatterie oder ein Generator), die eine Versorgungsspannung bereitstellt, und ein Energiespeicher (zum Beispiel ein Doppelschichtkondensator) bereitgestellt. Bei dem Verfahren wird der Energiespeicher für zumindest ein vorbestimmtes Zeitintervall derart mit dem Verbraucher und der Spannungserzeugungseinheit gekoppelt, dass die am Verbraucher anliegende Spannung niedriger als die Versorgungsspannung ist.

Auf diese Art und Weise können im Bordnetz auftretende Überspannungen mithilfe des Energiespeichers kompensiert werden.

Die Erfindung wird nun anhand einzelner bevorzugter Ausführungsbeispiele näher erläutert, wie auch unter Bezugnahme auf die Zeichnung, wobei
- Fig. 1: ein Bordnetz eines Kraftfahrzeugs gemäß einer ersten Ausführungsform der Erfindung veranschaulicht; und
- Fig. 2: ein Bordnetz eines Kraftfahrzeugs gemäß einer zweiten Ausführungsform der Erfindung veranschaulicht.

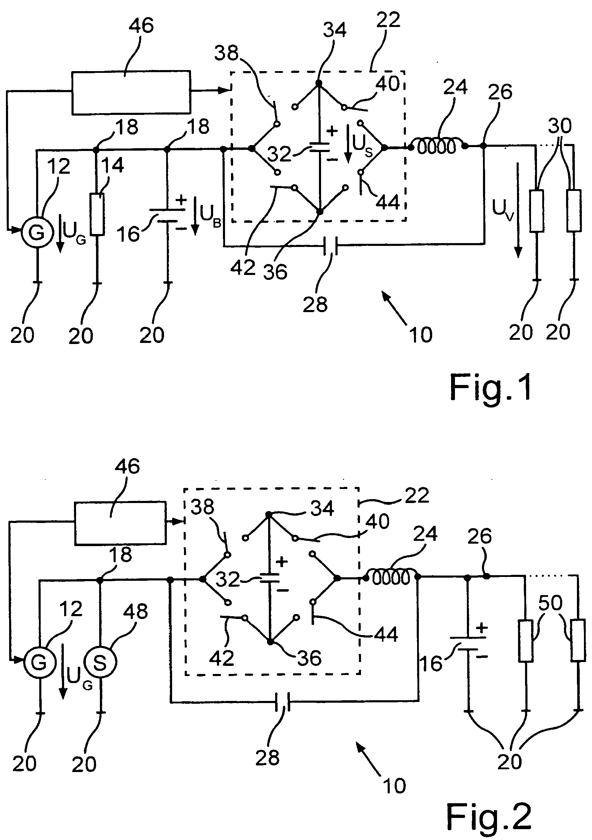

Ein in Fig. 1 dargestelltes Bordnetz 10 umfasst einen Generator 12, einen parallel zum Generator 12 geschalteten Hochleistungsverbraucher 14 und eine parallel zum Generator 12 gekoppelte Fahrzeugbatterie 16. Die Fahrzeugbatterie 16 ist eine Blei-Säure-Batterie. Der Generator 12, der Hochleistungsverbraucher 14 und die Fahrzeugbatterie 16 sind zwischen einem Primärpol 18 und einem Bezugspotenzial 20 gekoppelt. Die Fahrzeugbatterie 16 weist zum Beispiel eine Nennspannung von etwa 12 Volt auf.

Der Primärpol 18 ist über Schaltmittel 22 und eine Spule 24 mit einem sekundären Pol 26 gekoppelt. Parallel zur Reihenschaltung der Schaltmittel 22 und der Spule 24 ist ein Kondensator 28 geschaltet. Die Spule 24 und der Kondensator 28 bilden einen Tiefpassfilter. Die Induktivität der Spule 24 kann zum Beispiel im Bereich µH liegen. Die Kapazität des Kondensators 28 beträgt zum Beispiel 10 µF.

Zwischen dem Sekundärpol 26 und dem Bezugspotenzial 20 sind eine Vielzahl von sensiblen elektrischen Verbrauchern 30 gekoppelt. Die Verbraucher 30 können zum Beispiel ein Radio, ein Scheinwerfer, ein Elektromotor für einen Scheibenwischer u.ä. sein. Eine zwischen dem Sekundärpol 26 und dem Bezugspotenzial 20, also an den Verbrauchern 30 anliegende elektrische Spannung wird als Bordnetzspannung Uᵥ bezeichnet.

An dem Generator 12 liegt eine Generatorspannung U_{G}, und an der Fahrzeugbatterie 16 liegt eine Batteriespannung U_{B}. Aufgrund der Parallelschaltung gilt: U_{G}=U_{B}.

Das Bordnetz 10 umfasst einen Doppelschichtkondensator 32 als Energiespeicher, welcher einen positiven Anschluss 34 sowie einen negativen Anschluss 36 aufweist. Die Schaltmittel 22 umfassen einen ersten, einen zweiten, einen dritten und einen vierten elektrischen Schalter 38, 40, 42, 44. Der positive Anschluss 34 des Doppelschichtkondensators 32 ist über den ersten Schalter 38 mit dem Primärpol 18 und über den zweiten Schalter 40 und über die Spule 24 mit dem Sekundärpol 26 koppelbar. Entsprechend ist der negative Anschluss 36 des Doppelschichtkondensators 32 über den dritten Schalter 42 mit dem Primärpol 18 und über den vierten Schalter 44 mit der Spule 24 verbindbar.

Es ist eine Steuereinrichtung 46 bereitgestellt, die die Schaltmittel 22 ansteuert und die Generatorspannung U_{G} regelt.

In einem ersten Schaltzustand der Schaltmittel 22 sind der erste und der vierte Schalter 38, 44 geschlossen, so dass der positive Anschluss des Doppelschichtkondensators 32 mit dem Primärpol 18 und somit mit der Fahrzeugbatterie 16 gekoppelt ist. In diesem ersten Schaltzustand ist der negative Anschluss 36 des Doppelschichtkondensators 32 über die Spule 24 mit dem Sekundärpol 26 und somit mit den elektrischen Verbrauchern 30 gekoppelt.

In einem zweiten Schaltzustand der Schaltmittel 22 sind der erste und der zweite Schalter 38, 40 geschlossen, d. h. der Doppelschichtkondensator 32 ist überbrückt.

In einem dritten Schaltzustand sind der zweite und der dritte Schalter 40, 42 geschlossen: Der positive Anschluss 34 ist mit der Spule 24 und der negative Anschluss 36 ist mit dem Primärpol 18 gekoppelt.

In einem vierten Schaltzustand sind alle Schalter 38, 40, 42, 44 oder paarweise der erste und der dritte Schalter 38, 42 bzw. der zweite und der vierte Schalter 40, 44 geöffnet. In diesem vierten Zustand ist der Primärpol 18 von dem Sekundärpol 26 getrennt. Nachfolgend werden mögliche Betriebszustände des Bordnetzes 10, wie es in Fig. 1 dargestellt ist, erläutert:

### Normalbetrieb:

Im Normalbetrieb liefert der Generator 12 eine Spannung von U_{G}= 14,5 Volt. Diese Spannung liegt etwas höher als die Nennspannung der Fahrzeugbatterie 16, um diese nicht zu belasten. Also beträgt auch die an der Fahrzeugbatterie 16 anliegende Spannung U_{B} 14,5 Volt. Im Normalbetrieb sind die Schaltmittel 22 im zweiten Schaltzustand: Der Doppelschichtkondensator 32 ist über die Schalter 38, 40 und/oder über die Schalter 42, 44 überbrückt. Dies bedeutet, dass die Bordnetzspannung Uᵥ gleich der Generatorspannung U_{G} ist.

### Ladebetrieb:

In einem Ladebetrieb, in welchem der Doppelschichtkondensator 32 aufgeladen wird, erzeugt, der Generator 12 ebenfalls eine Spannung U_{G}= 14,5 Volt. In diesem Ladebetrieb werden die Schaltmittel 22 zwischen dem ersten und dem zweiten Schaltzustand abwechselnd geschaltet. Also verbleibt der erste Schalter 38 im Ladebetrieb geschlossen, während der zweite und der vierte Schalter 40, 44 abwechselnd geschaltet werden. Um die Bordnetzspannung Uᵥ etwa auf U_{V}=U_{G} einzustellen, ist die Zeitdauer, während welcher der zweite Schalter 40 geschlossen ist, deutlich länger, als die, während welcher der vierte Schalter 44 geschlossen ist. Über die meiste Zeit wird also der Doppelschichtkondensator 32 überbrückt.

### Überspannungskompensation bei Lastabschaltung:

Es kommt zu einer Erhöhung der Generatorspannung U_{G} dann, wenn der Hochleistungsverbraucher 14 plötzlich abgeschaltet wird. Die Generator-spannung U_{G} kann sich beispielsweise von 14,5 Volt auf 17 Volt erhöhen.

Der Generator 12 ist zu träge, um diese Spannungserhöhung schnell auszugleichen. Hier zeigt sich die Brückenschaltung einschließlich der Schaltmittel 22 und des Doppelschichtkondensators 32 hilfreich. Kommt es zu einer Überspannung zwischen dem Primärpol 18 und dem Bezugspotenzial 20, schaltet die Steuereinrichtung 46 die Schaltmittel 22 von dem zweiten Schaltzustand, in welchem der Doppelschichtkondensator 32 überbrückt ist, in den ersten Schaltzustand, in welchem der positive Anschluss 34 des Doppelschichtkondensators 32 mit dem Primärpol 18 gekoppelt ist. Dann gilt: U_{V}=U_{G}-U_{S}. Also wird die Bordnetzspannung Uᵥ in diesem Falle auf den Wert von 14,5 Volt geregelt. Um bei einem 5 Volt - Doppelschichtkondensator 32 die Bordnetzspannung Uᵥ auf diesen Wert einzustellen, kann es erforderlich sein, die Schaltmittel 22 abwechselnd zwischen dem ersten und dem zweiten Schaltzustand zu schalten. So kann nämlich ein beliebiger Mittelwert der Bordnetzspannung Uᵥ erreicht werden. Dann wird die Bordnetzspannung Uᵥ mittels des Tiefpassfilters einschließlich der Spule 24 und des Kondensators 28 geglättet. Es ist somit möglich, die Bordnetzspannung Uᵥ in einem Wertebereich von U_{G} - U_{S} und U_{G} + U_{S} beliebig einzustellen.

### Unterspannungskompensation bei Lastzuschalten:

Wird der Hochleistungsverbraucher 14 eingeschaltet, so bricht die Generatorspannung U_{G} ein. Zum Beispiel kann die Generatorspannung U_{G} von 14,5 Volt auf 12 Volt einbrechen. Dann schaltet die Steuereinrichtung 46 die Schaltmittel 22 von dem zweiten Schaltzustand, in welchem der Doppelschichtkondensator 32 überbrückt ist, in den dritten Schaltzustand, in welchem der negative Anschluss 36 des Doppelschichtkondensators 32 mit dem Primärpol 18 verbunden ist. Um die Bordnetzspannung Uᵥ auf 14,5 Volt zu regeln, kann es notwendig sein, die Schaltmittel 22 zwischen dem zweiten und dem dritten Schaltzustand abwechselnd zu schalten.

### Regenerationsbetrieb:

Mit dem Bordnetz 10 ist es auch möglich, einen Regenerationsbetrieb für die Fahrzeugbatterie 16 einzuleiten. In einem solchen Betrieb wird die Generatorspannung U_{G} für ein vorbestimmtes Zeitintervall auf einen solchen Wert eingestellt, der deutlich höher als die Nennspannung der Fahrzeugbatterie 16 liegt. Zum Beispiel kann die Generatorspannung U_{G} auf 17 Volt eingestellt werden. Während des Regenerationsbetriebs kann die Bordnetzspannung U_{V} zum Beispiel auf 14,5 Volt geregelt werden oder der Sekundärpol 26 kann von dem Primärpol 18 entkoppelt werden. Durch das Beaufschlagen der Fahrzeugbatterie 16 mit einer hohen Spannung steigt die wirksame Kapazität und sinkt der Innenwiderstand der Fahrzeugbatterie 16.

Fig. 2 stellt ein Bordnetz 10 gemäß einer zweiten Ausführungsform der Erfindung dar. Das Bordnetz 10 gemäß Fig. 2 entspricht im Wesentlichen dem gemäß Fig. 1, so dass nachfolgend lediglich die Unterschiede dazwischen erläutert werden. Die Fahrzeugbatterie 16 ist hier zwischen dem Sekundärpol 26 und dem Bezugspotenzial 20 gekoppelt, d. h. parallel zu den elektrischen Verbrauchern 30. Parallel zum Generator 12 ist als Hochleistungsverbraucher ein Starter 48 zum Anlassen einer Brennkraftmaschine des Kraftfahrzeugs gekoppelt. Die mit dem Sekundärpol 26 gekoppelten elektrischen Verbraucher sind nun mit dem Bezugszeichen 50 versehen.

Bei dem in Fig. 2 gezeigten Bordnetz 10 sind folgende Betriebszustände vorgesehen:

### Rekuperationsbetrieb:

Im Rekuperationsbetrieb wird im Kraftfahrzeug prinzipiell kein Kraftstoff verbraucht. Dieser Betrieb umfasst zum Beispiel das Bremsen mithilfe eines Bremssystems sowie einen Schubbetrieb, in welchem das Kraftfahrzeug durch die Brennkraftmaschine selbst abgebremst wird. Hier wird die Bremsenergie ausgenutzt: Die Generatorspannung U_{G} wird zum Beispiel auf 17 Volt eingestellt, also höher als 14,5 Volt im Normalbetrieb. Im Rekuperationsbetrieb werden die Schaltmittel 22 in einen solchen Schaltzustand geschaltet, in welchem der positive Anschluss 36 des Doppelschichtkondensators 32 mit dem Primärpol 18 und somit mit dem Generator 12 gekoppelt ist. Der negative Anschluss 36 des Doppelschichtkondensators 32 ist in diesem Rekuperationsbetrieb mit dem sekundären Pol 26 und somit mit der Fahrzeugbatterie 16 gekoppelt. So können sowohl der Doppelschichtkondensator 32 als auch die Fahrzeugbatterie 16 aufgeladen werden. Ist der Doppelschichtkondensator 32 vollständig aufgeladen, so kann dieser umgepolt werden, um ein weiteres Aufladen der Fahrzeugbatterie 16 zu ermöglichen. Also werden im Rekuperationsbetrieb sowohl der Doppelschichtkondensator 32 als auch die Fahrzeugbatterie 16 aufgeladen, ohne Kraftstoff zu verbrauchen.

### Zugbetrieb:

Der Zugbetrieb schließt sich unmittelbar an den Rekuperationsbetrieb an. Die im Rekuperationsbetrieb im Doppelschichtkondensator 32 gespeicherte Energie wird hier an die elektrischen Verbraucher 50 abgegeben, so dass die Generatorspannung U_{G} auf 12 Volt reduziert werden kann. Somit beträgt die Bordnetzspannung Uᵥ 14,5 Volt, auch bei der erniedrigten Generatorspannung U_{G}=12 Volt. Auf diesem Wege kann Kraftstoff gespart werden.

### Startunterstützung:

Beim Anlassen der Brennkraftmaschine steht das Kraftfahrzeug still, und der Generator 12 liefert keine Energie. Das Anlassen der Brennkraftmaschine durch den Starter 48 muss somit mithilfe der Batteriespannung U_{B} erfolgen. Diese beträgt bei abgeschaltetem Generator 12 etwa 12 Volt. Zu Beginn des Startvorgangs wird der positive Anschluss 34 des Doppelschichtkondensators 32 mit der Fahrzeugbatterie 16 und sein negativer Anschluss 36 mit dem Starter 48 gekoppelt. Zu Beginn des Startvorgangs wird der Doppelschichtkondensator 32 somit aufgeladen, so dass sich eine Spannung an dem Starter 48 ergibt, die niedriger als die Batteriespannung U_{B} ist. Zum Beispiel beträgt die am Starter 48 anliegende Spannung zu Beginn des Startervorgangs U_{B} - U_{S} = 7 Volt. Somit wird erreicht, dass die durch den zunächst kurzgeschlossenen Starter 48 fließenden Ströme nicht zu groß werden und die Fahrzeugbatterie 16 somit nicht überlastet wird. Nach ca. 50 Millisekunden nach dem Einleiten des Startvorgangs erfolgt eine Umpolung des Doppelschichtkondensators 32, so dass sein positiver Anschluss 34 mit dem Starter 48 und sein negativer Anschluss 36 mit der Fahrzeugbatterie 16 gekoppelt werden. Also wird nach etwa 50 Millisekunden die Spannung am Starter 48 erhöht, zum Beispiel auf U_{B} + U_{S} = 17 Volt. Durch eine solche Vorgehensweise wird die für das Anlassen der Brennkraftmaschine erforderliche Zeit im Vergleich zum Stand der Technik deutlich reduziert.

Insgesamt wird also ein Bordnetz 10 geschaffen, bei welchem ohne viel Aufwand mehrere Funktionen verwirklicht werden können. Durch Schaltmittel 22 kann sowohl eine Überspannung als auch eine Unterspannung kompensiert werden. Es kann außerdem der Vorgang des Startens einer Brennkraftmaschine unterstützt werden.

## Patentansprüche

1. Bordnetz (10) für ein Kraftfahrzeug, mit
- einer Fahrzeugbatterie (16),
- einem elektrischen Verbraucher (30, 48) und
- einem Energiespeicher (32) mit einem positiven und einem negativen Anschluss (34, 36),
**gekennzeichnet durch**
- Schaltmittel (22), die in einem ersten Schaltzustand den positiven Anschluss (34) des Energiespeichers (32) mit der Fahrzeugbatterie (16) und den negativen Anschluss (36) des Energiespeichers (32) mit dem elektrischen Verbraucher (30, 48) koppeln und in zumindest einen von dem ersten Schaltzustand verschiedenen zweiten Schaltzustand verbringbar sind, in welchem die Schaltmittel (22) die Fahrzeugbatterie (16) mit dem elektrischen Verbraucher (30, 48) koppeln und der Energiespeicher (32) überbrückt ist, und
- eine Steuereinrichtung (46), die dazu ausgelegt ist, zur Kompensation einer Überspannung am elektrischen Verbraucher (30, 48) die Schaltmittel (22) zwischen dem ersten und dem zweiten Schaltzustand zu schalten.

2. Bordnetz (10) nach Anspruch 1, **dadurch gekennzeichnet, dass** die Steuereinrichtung (46) dazu ausgelegt ist, durch Ansteuerung der Schaltmittel (22), insbesondere durch abwechselndes Schalten der Schaltmittel (22) zwischen dem ersten und dem zweiten Schaltzustand, eine solche elektrische Spannung (Uᵥ) an dem elektrischen Verbraucher (30, 48) bereitzustellen, deren Mittelwert in einem Wertebereich von U_{B} - U_{S} bis U_{B} liegt, wobei U_{B} eine an der Fahrzeugbatterie (16) anliegende Spannung und U_{S} eine durch den Energiespeicher (32) bereitgestellte Spannung bezeichnen.

3. Bordnetz (10) nach einem der vorhergehenden Ansprüche, **dadurch gekennzeichnet, dass** die Schaltmittel (22) in einem dritten Schaltzustand den positiven Anschluss (34) des Energiespeichers (32) mit dem elektrischen Verbraucher (30, 48) und den negativen Anschluss (36) des Energiespeichers (32) mit der Fahrzeugbatterie (16) koppeln.

4. Bordnetz (10) nach Anspruch 3, wobei ein Generator (12) parallel zu dem elektrischen Verbraucher (48) gekoppelt ist und die Steuereinrichtung (46) dazu ausgelegt ist, in einem Normalbetrieb die Generatorspannung (U_{G}) auf einen ersten Wert (14,5 Volt) einzustellen, der größer als die Nennspannung (12 Volt) der Fahrzeugbatterie (16) ist, **dadurch gekennzeichnet, dass** die Steuereinrichtung (46) weiterhin dazu ausgelegt ist, in einem Rekuperationsbetrieb die Generatorspannung (U_{G}) auf einen vorbestimmten zweiten Wert (17 Volt), der größer als der erste Wert (14,5 Volt) ist, einzustellen und die Schaltmittel (22) in den dritten Schaltzustand zu verbringen.

5. Bordnetz (10) nach einem der vorhergehenden Ansprüche, **dadurch gekennzeichnet, dass** die Steuereinrichtung (46) dazu ausgelegt ist, durch Ansteuerung der Schaltmittel (22), bei Rückbezug auf Anspruch 3 insbesondere durch abwechselndes Schalten der Schaltmittel (22) zwischen dem zweiten und dem dritten Schaltzustand, eine solche elektrische Spannung (Uᵥ) an dem elektrischen Verbraucher (30, 48) bereitzustellen, deren Mittelwert in einem Wertebereich von U_{B} bis U_{B} + U_{S} liegt, wobei U_{B} eine an der Fahrzeugbatterie (16) anliegende Spannung und U_{S} eine durch den Energiespeicher (32) bereitgestellte Spannung bezeichnen.

6. Bordnetz (10) nach einem der vorhergehenden Ansprüche, **dadurch gekennzeichnet, dass** die Schaltmittel (22) in einem vierten Schaltzustand den elektrischen Verbraucher (30, 48) von der Fahrzeugbatterie (16) trennen.

7. Bordnetz (10) nach einem der vorhergehenden Ansprüche, **dadurch gekennzeichnet, dass** ein Tiefpassfilter (24, 28) mit den Schaltmitteln (22) gekoppelt ist.

8. Bordnetz (10) nach einem der vorhergehenden Ansprüche, wobei ein Generator (12) zum Erzeugen einer Generatorspannung (U_{G}) parallel zu der Fahrzeugbatterie (16) gekoppelt ist, **dadurch gekennzeichnet, dass** die Steuereinrichtung (46) dazu ausgelegt ist, die Schaltmittel (22) abhängig von dem jeweils augenblicklichen Wert der Generatorspannung (U_{G}) anzusteuern, insbesondere die an dem elektrischen Verbraucher (30) anliegende Spannung auf einen Sollwert zu regeln.

9. Bordnetz (10) nach einem der vorhergehenden Ansprüche, wobei ein Generator (12) zum Erzeugen einer Generatorspannung (U_{G}) parallel zu der Fahrzeugbatterie (16) gekoppelt ist und die Steuereinrichtung (46) dazu ausgelegt ist, in einem Normalbetrieb die Generatorspannung (U_{G}) auf einen ersten Wert (14,5 Volt) einzustellen, der größer als die Nennspannung (12 Volt) der Fahrzeugbatterie (16) ist, **dadurch gekennzeichnet, dass** die Steuereinrichtung (46) weiterhin dazu ausgelegt ist, in einem Regenerationsbetrieb und/oder einem Rekuperationsbetrieb die Generatorspannung (U_{G}) auf einen vorbestimmten zweiten Wert (17 Volt) einzustellen, der größer als der erste Wert (14,5 Volt) ist.

10. Bordnetz (10) nach einem der Ansprüche 1 bis 7, wobei der elektrische Verbraucher (30, 48) ein Starter (48) für eine Brennkraftmaschine ist, **dadurch gekennzeichnet, dass** die Steuereinrichtung (46) dazu ausgelegt ist, bei Einschalten des Starters (48) die Schaltmittel (22) für ein vorbestimmtes Zeitintervall in den ersten Schaltzustand zu verbringen oder abwechselnd zwischen dem ersten und dem zweiten Schaltzustand zu schalten, so dass an dem Starter (48) eine niedrigere Spannung als die an der Fahrzeugbatterie (16) anliegende Spannung (U_{B}) anliegt.

11. Bordnetz (10) nach Anspruch 10, **dadurch gekennzeichnet, dass** die Steuereinrichtung (46) dazu ausgelegt ist, nach Ablauf eines vorbestimmten Zeitintervalls nach dem Einschalten des Starters (48) die an dem Starter (48) anliegende Spannung zu erhöhen, insbesondere bei Rückbezug auf Anspruch 3 die Schaltmittel (22) in den dritten Schaltzustand zu verbringen oder abwechselnd zwischen dem zweiten und dem dritten Schaltzustand zu schalten.

12. Bordnetz (10) nach einem der vorhergehenden Ansprüche, **dadurch gekennzeichnet, dass** die Schaltmittel (22) umfassen:
- einen ersten Schalter (38), insbesondere einen MOSFET, über welchen die Fahrzeugbatterie (16) mit dem positiven Anschluss (34) des Energiespeichers (32) koppelbar ist,
- einen zweiten Schalter (40), insbesondere einen MOSFET, über welchen der elektrische Verbraucher (30) mit dem positiven Anschluss (34) des Energiespeichers (32) koppelbar ist,
- einen dritten Schalter (42), insbesondere einen MOSFET, über welchen die Fahrzeugbatterie (16) mit dem negativen Anschluss (36) des Energiespeichers (32) koppelbar ist,
- einen vierten Schalter (44), insbesondere einen MOSFET, über welchen der elektrische Verbraucher (30) mit dem negativen Anschluss (34, 36) des Energiespeichers (32) koppelbar ist.

13. Kraftfahrzeug mit einem Bordnetz (10) nach einem der vorhergehenden Ansprüche.

14. Verfahren zum Betreiben eines elektrischen Verbrauchers (30, 48) in einem Bordnetz (10) eines Kraftfahrzeugs, wobei eine Spannungserzeugungseinheit, die eine Versorgungsspannung bereitstellt, und ein Energiespeicher (32) bereitgestellt sind, **dadurch gekennzeichnet, dass** für zumindest ein vorbestimmtes Zeitintervall der Energiespeicher (32) derart mit dem Verbraucher (30, 48) und der Spannungserzeugungseinheit gekoppelt wird, dass die am Verbraucher (30, 48) anliegende Spannung niedriger als die Versorgungsspannung ist und eine Überspannung am elektrischen Verbraucher (30, 48) kompensiert wird, wobei zur Kompensation der Überspannung Schaltmittel (22) zwischen einem ersten Schaltzustand, in welchem ein positiver Anschluss (34) des Energiespeichers (32) mit der Spannungserzeugungseinheit und ein negativer Anschluss (36) des Energiespeichers (32) mit dem elektrischen Verbraucher (30, 48) gekoppelt sind, und einem von dem ersten Schaltzustand verschiedenen zweiten Schaltzustand geschaltet werden, in welchem die Schaltmittel (22) die Spannungserzeugungseinheit mit dem elektrischen Verbraucher (30, 48) koppeln und der Energiespeicher (32) überbrückt ist.

## Claims

1. Vehicle electrical system (10) for a motor vehicle with
- a vehicle battery (16),
- an electrical consumer (30, 48) and
- an energy store (32) with a positive and a negative connection (34, 36),
**characterised by**
- switching means (22) which in a first switching status connect the positive connection (34) of the energy store (32) to the vehicle battery (16) and the negative connection (36) of the energy store (32) to the electrical consumer (30, 48) and can be brought into at least one second switching status, which differs from the first operating status, in which the switching means (22) connect the vehicle battery (16) to the electrical consumer (30, 48) and the energy store (32) is bridged, and
- a control device (46) designed to switch the switching means (22) between the first and the second switch status to compensate for excess voltage at the electrical consumer (30,48).

2. Vehicle electrical system (10) according to claim 1 **characterised in that** through controlling the switching means (22), more particularly through alternating switching of the switching means (22) between the first and the second switch status, the control device (46) is designed to provide an electrical voltage (Uᵥ) on the electrical consumer (38, 48), the mean value of which is within a value range of U_{B} - U_{S} to U_{B}, wherein U_{B} denotes a voltage at the vehicle battery (16) and U_{S} a voltage provided by the energy store (32).

3. Vehicle electrical system (10) according to any one of the preceding claims, **characterised in that** in a third switch status the switching means (22) connect the positive connection (34) of the energy store (32) to the electrical consumer (30, 48) and the negative connection (36) to the vehicle battery (16).

4. Vehicle electrical system (10) according to claim 3, wherein a generator (12) is connected in parallel to the electrical consumer (48) and the control device (46) is designed in normal operation to set the generator voltage (U_{G}) to an initial value (14.5 Volts) which is greater than the nominal voltage (12 Volts) of the vehicle battery (16), **characterised in that** the control device (46) is also designed in recuperation operation to set the generator voltage (U_{G}) to a predetermined second value (17 Volts) which is greater than the first value (14.5 Volts) and to bring the switching means (22) into the third switching status.

5. Vehicle electrical system (10) according to any one of the preceding claims **characterised in that** through controlling the switching means (22), more particularly, referring back to claim 3, by means of alternating switching of the switching means (22) between the second and the third switch status, the control device (46) is designed to provide an electrical voltage (Uᵥ) at the electrical consumer (30, 48), the mean value of which is within a value range of U_{B} to U_{B} + U_{S}, where U_{B} denotes the voltage present on the vehicle battery (16) and U_{S} the voltage provided by an energy store (32).

6. Vehicle electrical system (10) according to any one of the preceding claims **characterised in that** in a fourth switch status the switching means (22) separate the electrical consumer (30, 48) from the vehicle battery (16).

7. Vehicle electrical system (10) according to any one of the preceding claims **characterised in that** a deep pass filter (24, 28) is connected to the switching means (22).

8. Vehicle electrical system (10) according to any one of the preceding claims for generating a generator voltage (U_{G}) a generator (12) is connected in parallel to the vehicle battery (16) **characterised in that** the control device (46) is designed to control the switching means (22) in dependence on the momentary value of the generator voltage (U_{G}), more particularly to regulate the voltage present on the electrical consumer (30) to a nominal value.

9. Vehicle electrical system (10) according to any one of the preceding claims, wherein to generate a generator voltage (U_{G}) a generator (12) is connected in parallel to the vehicle battery (16) and the control device (46) is designed in normal operation to set the generator voltage (U_{G}) to a first value (14.5 Volts), which is greater than the nominal voltage (12 Volts) of the vehicle battery (16), **characterised in that** the control device (46) is also designed in regeneration operation and/or recuperation operation to set the generator voltage (U_{G}) to a predetermined second value (17 Volts) which is greater than the first value (14.5 Volts).

10. Vehicle electrical system (10) according to any one of claims 1 to 7 wherein the electrical consumer (30, 48) is a starter (48) for an internal combustion engine, **characterised in that** on switching on the starter (48) the control device (46) is designed to bring the switching means (22) into the first switch status for a predetermined period of time, or to switch them alternately between the first and second switch status so that there is a lower voltage on the starter (48) than the voltage (U_{B}) present on the vehicle battery (16).

11. Vehicle electrical system (10) according to claim 10 **characterised in that** on expiry of a predetermined time interval after switching on the starter (48), the control device (46) is designed to increase the voltage on the starter (48), more particularly, referring back to claim 3, through bringing the switching means (22) into the third switch status or to switch them alternately between the second and the third switch status.

12. Vehicle electrical system (10) according to any one of the preceding claims **characterised in that** the switching means (22) comprise:
- a first switch (38), more particularly a MOSFET, via which the vehicle battery (16) can be connected with the positive connection (34) of the energy store (32),
- a second switch (40), more particularly a MOSFET, via which the electrical consumer (30) can be connected with the positive connection (34) of the energy store (32),
- a third switch (42), more particularly a MOSFET, via which the vehicle battery (16) can be connected with the negative connection (36) of the energy store (32),
- a fourth switch (44), more particularly a MOSFET, via which the electrical consumer (30) can be connected with the negative connection (34, 36) of the energy store (32).

13. Motor vehicle with a vehicle electrical system (10) according to any one of the preceding claims.

14. Method of operating an electrical consumer (30, 48) in a vehicle electrical system (10) of a motor vehicle, wherein a voltage generation unit, which provides a supply voltage, and an energy store (32) are provided, **characterised in that** for at least a predetermined period of time the energy store (32) is connected to the consumer (30, 48) and the voltage generation unit in such a way that the voltage present on the consumer (30, 48) is lower than the supply voltage and excess voltage on the electrical consumer (30, 48) is compensated, wherein for the compensation of the excess voltage, switching means (22) are switched between a first switch status, in which a positive connection (34) of the energy store (32) is connected with the voltage generation unit and a negative connection (36) of the energy store (32) is connected with the electrical consumer (30, 48), and a second switch status, which differs from the first switch status, in which the switching means (22) connect the voltage generation unit with the electrical consumer (30, 48) and the energy store (32) is bridged.

## Revendications

1. Réseau de bord (10) pour un véhicule automobile, avec
- une batterie de véhicule (16),
- un consommateur électrique (30, 48) et
- un accumulateur d'énergie (32) avec une borne positive et une borne négative (34, 36),
**caractérisé par**
- des moyens de commutation (22) qui, dans un premier état de commutation, relient la borne positive (34) de l'accumulateur d'énergie (32) à la batterie de véhicule (16) et la borne négative (36) de l'accumulateur d'énergie (32) au consommateur électrique (30, 48) et qui peuvent être mis dans au moins un deuxième état de commutation qui est différent du premier état de commutation et dans lequel les moyens de commutation (22) relient la batterie de véhicule (16) au consommateur électrique (30, 48) et l'accumulateur d'énergie (32) est ponté, et
- un dispositif de commande (46) qui est conçu pour commuter les moyens de commutation (22) entre le premier et le deuxième état de commutation afin de compenser une surtension au niveau du consommateur électrique (30, 48).

2. Réseau de bord (10) selon la revendication 1, **caractérisé en ce que** le dispositif de commande (46) est conçu pour, en commandant les moyens de commutation (22), notamment en commutant alternativement les moyens de commutation (22) entre le premier et le deuxième état de commutation, fournir au consommateur électrique (30, 48) une tension électrique (Uᵥ) telle que la valeur moyenne de celle-ci est comprise dans une plage de valeurs allant de U_{B}-U_{S} à U_{B}, U_{B} désignant une tension présente au niveau de la batterie de véhicule (16) et U_{S} désignant une tension fournie par l'accumulateur d'énergie (32).

3. Réseau de bord (10) selon l'une des revendications précédentes, **caractérisé en ce que**, dans un troisième état de commutation, les moyens de commutation (22) relient la borne positive (34) de l'accumulateur d'énergie (32) au consommateur électrique (30, 48) et la borne négative (36) de l'accumulateur d'énergie (32) à la batterie de véhicule (16).

4. Réseau de bord (10) selon la revendication 3, dans lequel un générateur (12) est couplé en parallèle avec le consommateur électrique (48) et le dispositif de commande (46) est conçu pour régler en fonctionnement normal la tension de générateur (U_{G}) à une première valeur (14,5 V) qui est supérieure à la tension nominale (12 V) de la batterie de véhicule (16), **caractérisé en ce que** le dispositif de commande (46) est aussi conçu pour, en fonctionnement de récupération, régler la tension de générateur (U_{G}) à une deuxième valeur prédéterminée (17 V) qui est supérieure à la première valeur (14,5 V) et pour mettre les moyens de commutation (22) dans le troisième état de commutation.

5. Réseau de bord (10) selon l'une des revendications précédentes, **caractérisé en ce que** le dispositif de commande (46) est conçu pour, en commandant les moyens de commutation (22), en référence à la revendication 3, notamment en commutant alternativement les moyens de commutation (22) entre le deuxième et le troisième état de commutation, fournir au consommateur électrique (30, 48) une tension électrique (Uᵥ) telle que la valeur moyenne de celle-ci est comprise dans une plage de valeurs allant de U_{B} à U_{B}+U_{S}, U_{B} étant une tension présente au niveau de la batterie de véhicule (16) et U_{S} étant une tension fournie par l'accumulateur d'énergie (32).

6. Réseau de bord (10) selon l'une des revendications précédentes, **caractérisé en ce que**, dans un quatrième état de commutation, les moyens de commutation (22) séparent le consommateur électrique (30, 48) de la batterie de véhicule (16).

7. Réseau de bord (10) selon l'une des revendications précédentes, **caractérisé en ce qu'**un filtre passe-bas (24, 28) est couplé aux moyens de commutation (22).

8. Réseau de bord (10) selon l'une des revendications précédentes, dans lequel un générateur (12) est couplé en parallèle avec la batterie de véhicule (16) pour produire une tension de générateur (U_{G}), **caractérisé en ce que** le dispositif de commande (46) est conçu pour commander les moyens de commutation (22) en fonction de la valeur momentanée de la tension de générateur (U_{G}), notamment pour régler à une valeur de consigne la tension présente au niveau du consommateur électrique (30).

9. Réseau de bord (10) selon l'une des revendications précédentes, dans lequel un générateur (12) est couplé en parallèle avec la batterie de véhicule (16) pour produire une tension de générateur (U_{G}) et le dispositif de commande (46) est conçu pour, en fonctionnement normal, régler la tension de générateur (U_{G}) à une première valeur (14,5 V) qui est supérieure à la tension nominale (12 V) de la batterie de véhicule (16), **caractérisé en ce que** le dispositif de commande (46) est aussi conçu pour, en fonctionnement de régénération et/ou en fonctionnement de récupération, régler la tension de générateur (U_{G}) à une deuxième valeur prédéterminée (17 V) qui est supérieure à la première valeur (14,5 V).

10. Réseau de bord (10) selon l'une des revendications 1 à 7, dans lequel le consommateur électrique (30, 48) est un démarreur (48) pour un moteur à combustion interne, **caractérisé en ce que** le dispositif de commande (46) est conçu pour, lors de l'enclenchement du démarreur (48), mettre les moyens de commutation (22) pendant un intervalle de temps prédéterminé dans le premier état de commutation ou les commuter alternativement entre le premier et deuxième état de commutation de telle sorte qu'il y a au niveau du démarreur (48) une tension inférieure à la tension (U_{B}) présente au niveau de la batterie de véhicule (16).

11. Réseau de bord (10) selon la revendication 10, **caractérisé en ce que** le dispositif de commande (46) est conçu pour, à la fin d'un intervalle de temps prédéterminé après l'enclenchement du démarreur (48), augmenter la tension présente au niveau du démarreur (48) et, notamment en référence à la revendication 3, mettre les moyens de commutation (22) dans le troisième état de commutation ou les commuter alternativement entre le deuxième et le troisième état de commutation.

12. Réseau de bord (10) selon l'une des revendications précédentes, **caractérisé en ce que** les moyens de commutation (22) comprennent :
- un premier interrupteur (38), notamment un MOSFET, par l'intermédiaire duquel la batterie de véhicule (16) peut être reliée à la borne positive (34) de l'accumulateur d'énergie (32),
- un deuxième interrupteur (40), notamment un MOSFET, par l'intermédiaire duquel le consommateur électrique (30) peut être relié à la borne positive (34) de l'accumulateur d'énergie (32),
- un troisième interrupteur (42), notamment un MOSFET, par l'intermédiaire duquel la batterie de véhicule (16) peut être reliée à la borne négative (36) de l'accumulateur d'énergie (32),
- un quatrième interrupteur (44), notamment un MOSFET, par l'intermédiaire duquel le consommateur électrique (30) peut être relié à la borne négative (34, 36) de l'accumulateur d'énergie (32).

13. Véhicule automobile avec un réseau de bord (10) selon l'une des revendications précédentes.

14. Procédé de fonctionnement d'un consommateur électrique (30, 48) dans un réseau de bord (10) d'un véhicule automobile, une unité productrice de tension qui fournit une tension d'alimentation et un accumulateur d'énergie (32) étant prévus, **caractérisé en ce que**, pour au moins un intervalle de temps prédéterminé, l'accumulateur d'énergie (32) est relié de telle sorte au consommateur (30, 48) et à l'unité productrice de tension que la tension présente au niveau du consommateur (30, 48) est inférieure à la tension d'alimentation et une surtension au niveau du consommateur électrique (30, 48) est compensée, des moyens de commutation (22) étant, pour compenser la surtension, commutés entre un premier état de commutation dans lequel une borne positive (34) de l'accumulateur d'énergie (32) est reliée à l'unité productrice de tension et une borne négative (36) de l'accumulateur d'énergie (32) est reliée au consommateur électrique (30, 48) et un deuxième état de commutation qui est différent du premier état de commutation et dans lequel les moyens de commutation (22) relient l'unité productrice de tension au consommateur électrique (30, 48) et l'accumulateur d'énergie (32) est ponté.
